# EUROPEAN PATENT SPECIFICATION

(11) **EP 4 084 975 B1**
(45) Date of publication and mention of the grant of the patent: **22.07.2026**
(21) Application number: 20910049.4
(22) Date of filing: 28.12.2020
(51) Int. Cl.: B60G 5/053, B61F 5/04, B60G 11/10, B60G 11/38, F16F 1/26, F16F 1/40

(54) **CONNECTION BOLSTER**
VERBINDUNGSPOLSTER
TRAVERSE DE LIAISON

(30) Priority: 31.12.2019 TR 201922885
(43) Date of publication of application: 09.11.2022
(73) Proprietor: Sem Lastik Sanayii Ve Ticaret Anonim Sirketi, Bursa (TR)
(72) Inventor: GOMEC, Serkan, Osmangazi/ Bursa (TR); PENEKLI, Dogan, Osmangazi/Bursa (TR); TOKAY, Onat, Osmangazi/Bursa (TR); KAYACI, Savas, Nilufer/Bursa (TR)
(74) Representative: Demirkiran, Hasan
(86) International application number: PCT/TR2020/051412
(87) International publication number: WO 2021/137827

(56) References cited:
- EP-B1- 2 878 851
- US-A- 4 121 393
- US-A- 4 499 694
- US-A- 5 765 322
- US-A1- 2010 270 719
- US-A1- 2012 326 366
- US-B2- 8 052 166

## Description

### Technical Field

The invention relates to a connection bolster which is developed by reinforcing with composite material in order to contribute to energy conservation in the vehicle.

More specifically, the present invention relates to an improvement which is made for contributing to reduction in vehicle weight by lightening connection bolster that is one of the heaviest components of the suspension system.

### Prior Art

With the usage of electric motors which are more eco-friendly and energy efficient, today's technology level of the automotive industry makes necessary to reduce weight in vehicles.

Vehicle suspension systems are structures which are convenient for re-design to fulfill this requirement. By considering the dynamic behavior of fasteners under repeated loads, they can be redesigned with lighter materials as improving their lifetime too.

In the patent document no. US8052166B2, an elastomeric spring suspension is disclosed for supporting a longitudinally extending vehicle frame rail above first and second axles forming a tandem axle configuration.

In the patent document no. CA2810392A1, montage of the suspension element to the connection plate is mentioned. However, here, there is no study which is aimed neither to improve lifetime of the connection bolster or neither to reduce vehicle weight and contribute to energy conservation.

In the patent document no. CN108639087A, there is a method for improving the anti-fatigue performance of a locomotive rubber-metal block by changing thicknesses. However, here, there is no study which is aimed neither to improve lifetime of the connection bolster or neither to reduce vehicle weight and contribute to energy conservation.

In the patent document no. US5676356A, a flexible bolster which comprises a block of rubber or rubber-like elastomer sandwiched between two end plates. However, here, there is no study which is aimed neither to improve lifetime of the connection bolster or neither to reduce vehicle weight and contribute to energy conservation.

As a result, the requirement for improving lifetime of the connection bolster as well as reducing vehicle weight and contributing to energy conservation has led the present innovative solution to emerge out.

### Objectives and Short Description of the Invention

Main purpose of the invention is to present a connection bolster which is developed by reinforcing with composite material in order to contribute to energy conservation in the vehicle.

Another aim of the invention is to contribute to reduction in vehicle weight by lightening connection bolster that is one of the heaviest components of the suspension system.

The present invention is a connection bolster comprising a layered region between a lower plate and an upper plate and, here mentioned lower plate, upper plate and layered section are made of composite material.

Mentioned composite material can be all kinds of metal alloys, polymer derivatives, glass-reinforced and/or carbon reinforced polymer derivatives or materials in which two or more of these materials are hybridized by being mixed in different proportions. In a preferred embodiment of the invention, said composite material is carbon fiber or glass fiber reinforced or, polymer based.

A preferred embodiment of the invention comprises a connection hole lying along said lower plate, upper plate and layered plate.

A preferred embodiment of the invention comprises a flexible connection piece which, passing along mentioned connection hole, does not carry momentum.

In a preferred embodiment of the invention, the lower plate and the upper plate have a rib geometry.

In a preferred embodiment of the invention, the layered section includes rubber compound.

In a preferred embodiment of the invention, in order to improve the life properties of the lower plate and upper plate and to achieve the desired life properties, a friction sheet is added to both plates' middle regions where the connection hole exists.

A preferred embodiment of the invention comprises at least one mounting hole in the corner areas of the plates.

A preferred embodiment of the invention comprises bush structures that is placed inside mentioned mounting holes in order to allow the lower plate and upper plate to have a stronger form.

### Description of the Figures

In Figure 1, a perspective view of the present innovative connection bolster is given.
In Figure 2, the top view of mentioned innovative connection bolster is given.
In Figure 3, the left view of said innovative connection bolster is given.
In Figure 4, the bottom view of the innovative connection bolster is given.
In figure 5, a front sectional view of the innovative connection bolster is given.
In Figure 6, the exploded assembly view in which the innovative connection bolster is connected to leaf spring is given.

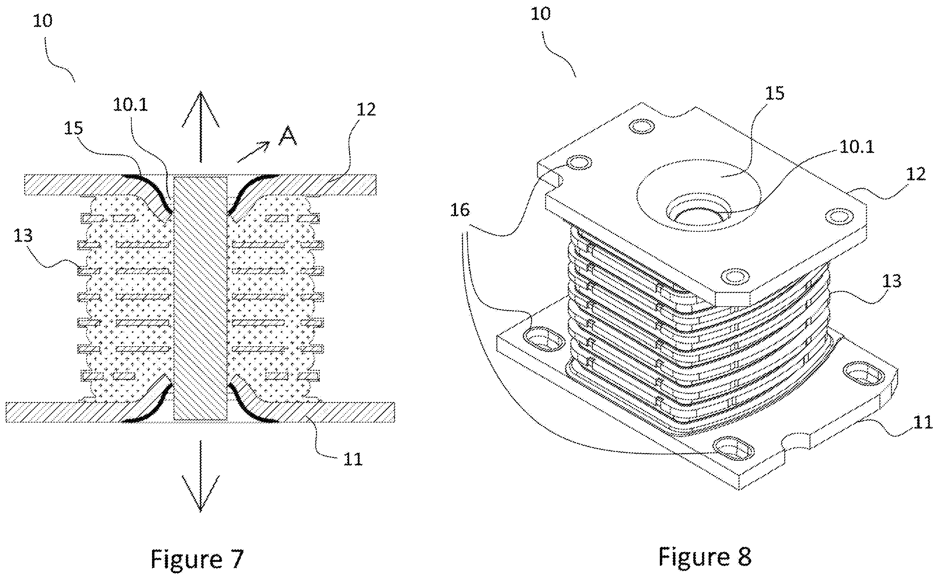

In Figure 7, a front sectional view of the innovative connection bolster's an embodiment that includes friction sheet is given. The thickness of the plates in this embodiment is less than the plate thicknesses in the embodiment given in the previous drawings.
In Figure 8, a perspective view of the innovative connection bolster's an embodiment including friction sheet and bushes is given.

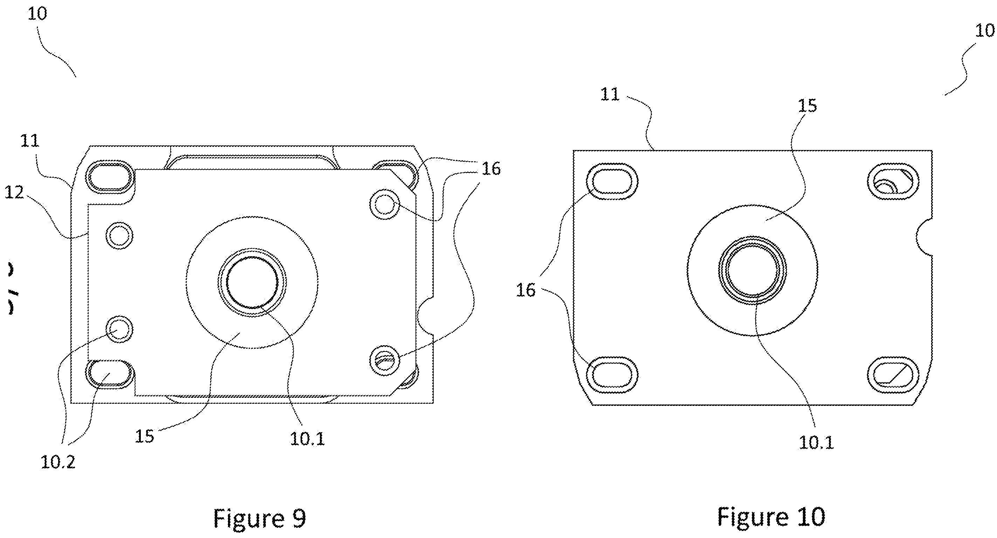

In Figure 9, a top view of the innovative connection bolster's mentioned embodiment that includes friction sheet and bushes is given.
In Figure 10, a bottom view of the innovative connection bolster's said embodiment that includes friction sheet and bushes is given.

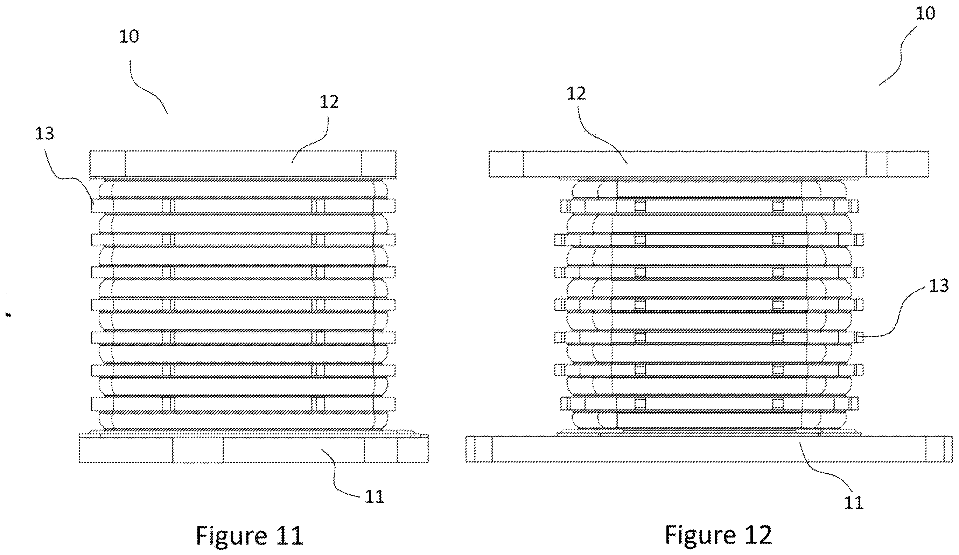

In Figure 11, a left view of the innovative connection bolster's said embodiment that includes friction sheet and bushes is given.
In Figure 12, a front view of the innovative connection bolster's said embodiment that includes friction sheet and bushes is given.

### Reference Numbers

- 10.: Connection bolster
- 10.1.: Connection hole
- 10.2.: Mounting hole
- 11.: Lower plate
- 12.: Upper plate
- 13.: Layered section
- 14.: Rib geometry
- 15.: Friction sheet
- 16.: Bush
- 20.: Connection piece

### Detailed Description of the Invention

The present invention relates to a connection bolster (10) which is developed by reinforcing with composite material in order to contribute to energy conservation in the vehicle. Mentioned connection bolster (10) has a layered structure and generally works in the shear and compression directions.

Different materials that can be substituted for all metal materials used has been investigated and it has been observed that carbon fiber or glass fiber reinforced composite materials can be used instead of them. Thus, a great weight advantage has been achieved in the present innovative product.

In the present invention, an additional contribution is provided to reduce weight of the vehicle by increasing the thickness of the composite material in the lower plate (11) and the upper plate (12) and changing the design (thickness reduction etc.) of the region where the connection bolster (10) will be mounted. This reduction in vehicle weight is possible by the reduction in the weight of mentioned region (opposite side corresponding in the vehicle) thanks to the change made in the design of said region where the connection bolster (10) will be mounted.

Since the polymer-based composite materials used in the present invention are suitable for recycling, it contributes to improvement in the important issues such as environmental protection and energy efficiency.

In the present innovative connection bolster (10), an additional contribution is provided to reduce weight of the vehicle by increasing the thickness of the composite material in the lower plate (11) and the upper plate (12) and changing the design of the region where the connection bolster (10) will be mounted. The preferred embodiment of the invention consists of composite materials at the top and bottom sides and consists of layered rubber compound and composite materials at the region between top and bottom sides.

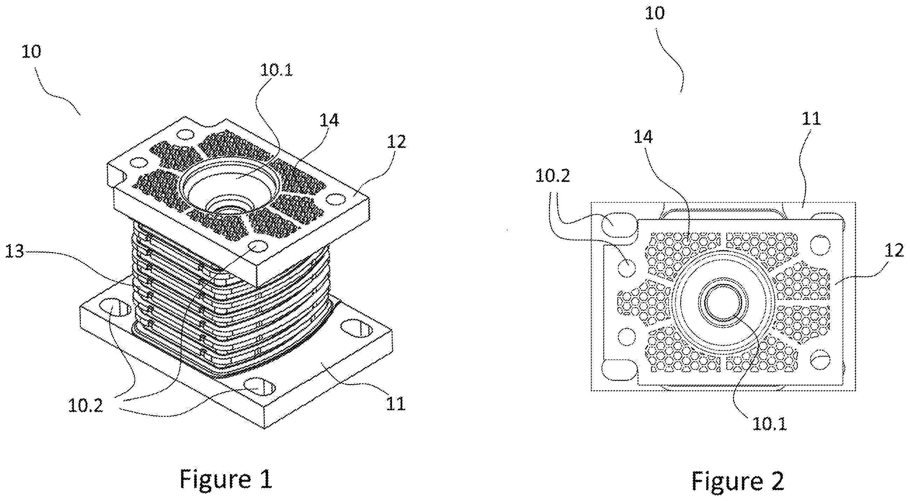

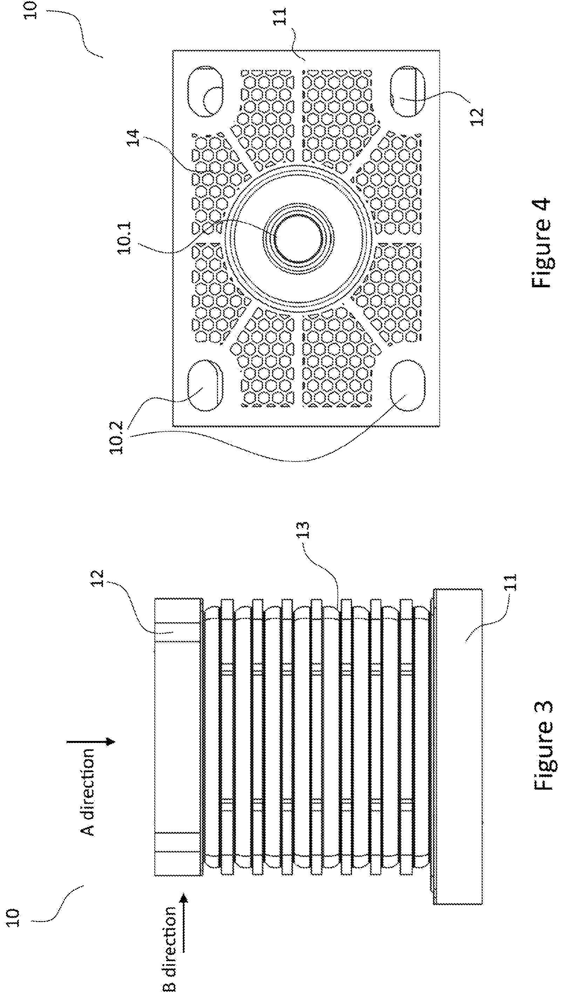

The top view of the present innovative connection bolster (10) is given in Figure 2 and its bottom view is given in Figure 4. Between the lower plate (11) and upper plate (12) which are shown in the figures, there is a layered section (13) consisting of rubber compound and composite material. There is a reinforced rib geometry (14) on the lower plate (11) and upper plate (12) which are made of composite material.

Bolt connection is used due to the structure of the plates in the lower and upper parts and, when the vehicle wheel is idle, it carries weight by being loaded and provides the balance in this direction.

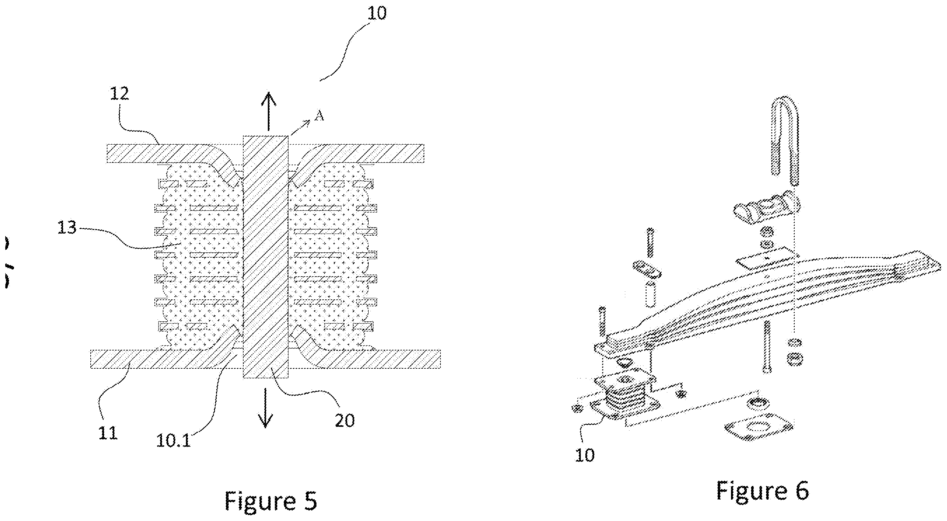

As seen in Figure 5, in the present innovative connection bolster (10), in order to the layered section (13) to not be forced in the tensile direction; it is ensured that the lower plate (11) and the upper plate (12) are connected to each other by a flexible connection piece (20) (hinged bolt, chain, steel rope, composite rope) that does not carry momentum. There is a connection hole (10.1) that extends along the middle of both plates (11, 12) and of layered section (13) for allowing mentioned connection piece (20) to pass through inside.

As seen in Figure 6, when the vehicle wheel is idle, the connection piece (20) in the structure of the present innovative connection bolster (10) carries weight by being loaded and provides the balance in this direction. The connection bolster (10) positioned between the leaf spring and truck axle, is exposed to the truck weight including itself and dynamic loads coming from the road. The compression of the connection bolster (10) in the vertical direction and its sliding (shear) motion relative to the connection axis reduce these effects.

The feature of the present invention is that the lower plate (11), upper plate (12) and layered section (13) are structures (composite, all kinds of metal alloys, polymer derivatives, glass-reinforced and/or carbon reinforced polymer derivatives or materials in which two or more of these materials are hybridized by being mixed in different proportions) which are produced from more rigid material than rubber. In the preferred embodiment of the invention, a suitable reinforcing rib geometry (14) design has been added to the plates in order to allow the lower plate (11) and upper plate (12) to have a stronger form. Mentioned rib geometry (14) is not essential element of the present innovative connection bolster (10) and, the usage of rib geometry (14) may be preferred in an alternative embodiment of the invention.

In the invention, in order to improve the life properties of the lower plate (11) and upper plate (12) and to achieve the desired life properties, a suitable friction sheet (15) is added to both plates' middle regions (where the connection hole (10.1) exists).

In the preferred embodiment of the invention, in order to allow the lower plate (11) and upper plate (12) to have a stronger form, a suitable bush (16) is placed inside each of mounting holes (10.2) located in the corner areas of the plates.

## Claims

1. A connection bolster (10) comprising a lower plate (11), an upper plate (12), and a layered section (13) between said lower plate (11) and upper plate (12), the lower plate (11), upper plate (12), and layered section (13) are made of composite material and **characterized in that**; it further comprises
- a connection hole (10.1) lying along the lower plate (11), the upper plate (12), and the layered section (13),
- a flexible connection piece (20), which, passing along the connection hole (10.1), ensures the lower plate (11) and the upper plate (12) are connected to each other for the layered section (13) to not be forced in a tensile direction, and
- a friction sheet (15), which is added to middle regions of the lower plate (11) and the upper plate (12), where the connection hole (10.1) exists, in order to improve life properties of the lower plate (11) and the upper plate (12) and to achieve life properties.

2. The connection bolster (10) according to Claim 1 and, wherein mentioned composite material is all kinds of metal alloys, polymer derivatives, glass-reinforced and/or carbon reinforced polymer derivatives or materials in which two or more of these materials are hybridized by being mixed in different proportions.

3. The connection bolster (10) according to Claim 1 or Claim 2 and, wherein said composite material is carbon fiber or glass fiber reinforced or, polymer based.

4. The connection bolster (10) according to one of the preceding claims and, wherein the lower plate (11) and the upper plate (12) have a rib geometry (14).

5. The connection bolster (10) according to one of the preceding claims and, wherein the layered section (13) includes rubber compound.

6. The connection bolster (10) according to one of the preceding claims and, **characterized by**; comprising at least one mounting hole (10.2) in the corner areas of the plates.

7. The connection bolster (10) according to Claim 6 and **characterized in that**; in order to allow the lower plate (11) and upper plate (12) to have a stronger form, it comprises bush (16) structures placed inside mentioned mounting holes (10.2).

## Patentansprüche

1. Verbindungsbolster (10), umfassend eine untere Platte (11), eine obere Platte (12) und einen Schichtabschnitt (13) zwischen der unteren Platte (11) und der oberen Platte (12), wobei die untere Platte (11), die obere Platte (12) und der Schichtabschnitt (13) aus Verbundmaterial hergestellt sind, **dadurch gekennzeichnet, dass** es ferner umfasst:
- eine Verbindungsbohrung (10.1), die sich entlang der unteren Platte (11), der oberen Platte (12) und des Schichtabschnitts (13) erstreckt,
- ein flexibles Verbindungsstück (20), welches, indem es durch die Verbindungsbohrung (10.1) verläuft, sicherstellt, dass die untere Platte (11) und die obere Platte (12) miteinander verbunden sind, damit der Schichtabschnitt (13) nicht in einer Zugrichtung beansprucht wird, und
- ein Reibblech (15), welches in mittleren Bereichen der unteren Platte (11) und der oberen Platte (12), in denen die Verbindungsbohrung (10.1) vorhanden ist, hinzugefügt ist, um die Lebensdauereigenschaften der unteren Platte (11) und der oberen Platte (12) zu verbessern und Lebensdauereigenschaften zu erzielen.

2. Verbindungsbolster (10) nach Anspruch 1, wobei das genannte Verbundmaterial alle Arten von Metalllegierungen, Polymerderivaten, glasfaserverstärkten und/oder kohlenstofffaserverstärkten Polymerderivaten oder Materialien ist, in denen zwei oder mehr dieser Materialien hybridisiert sind, indem sie in unterschiedlichen Anteilen gemischt sind.

3. Verbindungsbolster (10) nach Anspruch 1 oder Anspruch 2, wobei das Verbundmaterial kohlenstofffaser- oder glasfaserverstärkt oder polymerbasiert ist.

4. Verbindungsbolster (10) nach einem der vorhergehenden Ansprüche, wobei die untere Platte (11) und die obere Platte (12) eine Rippengeometrie (14) aufweisen.

5. Verbindungsbolster (10) nach einem der vorhergehenden Ansprüche, wobei der Schichtabschnitt (13) eine Gummimischung enthält.

6. Verbindungsbolster (10) nach einem der vorhergehenden Ansprüche, **dadurch gekennzeichnet, dass** es mindestens eine Montagebohrung (10.2) in den Eckbereichen der Platten umfasst.

7. Verbindungsbolster (10) nach Anspruch 6, **dadurch gekennzeichnet, dass** es, um der unteren Platte (11) und der oberen Platte (12) eine festere Form zu verleihen, Buchsenstrukturen (16) umfasst, die innerhalb der genannten Montagebohrungen (10.2) platziert sind.

## Revendications

1. Dispositif de liaison (10) comprenant une plaque inférieure (11), une plaque supérieure (12) et une section stratifiée (13) interposée entre celles-ci, la plaque inférieure (11), la plaque supérieure (12) et la section stratifiée (13) étant réalisées en matériau composite, **caractérisé en ce qu'**il comprend en outre :
- un trou de liaison (10.1) traversant la plaque inférieure (11), la plaque supérieure (12) et la section stratifiée (13),
- un élément de liaison flexible (20) passant à travers ledit trou de liaison (10.1) et reliant la plaque inférieure (11) à la plaque supérieure (12) de manière à éviter toute mise en traction de la section stratifiée (13), et
- une feuille de friction (15) disposée dans les zones centrales de la plaque inférieure (11) et de la plaque supérieure (12), au niveau du trou de liaison (10.1), afin d'améliorer la durée de vie desdites plaques

2. Dispositif de liaison (10) selon la revendication 1, **caractérisé en ce que** le matériau composite comprend des alliages métalliques, des matériaux polymères, des polymères renforcés de fibres de verre et/ou de carbone, ou des combinaisons de ceux-ci.

3. Dispositif de liaison (10) selon la revendication 2, **caractérisé en ce que** le matériau composite est un polymère renforcé de fibres de carbone ou de fibres de verre.

4. Dispositif de liaison (10) selon l'une quelconque des revendications précédentes, **caractérisé en ce que** la plaque inférieure (11) et la plaque supérieure (12) présentent une géométrie nervurée (14).

5. Dispositif de liaison (10) selon l'une quelconque des revendications précédentes, **caractérisé en ce que** la section stratifiée (13) comprend un composé de caoutchouc.

6. Dispositif de liaison (10) selon l'une quelconque des revendications précédentes, **caractérisé en ce qu'**il comprend au moins un trou de montage (10.2) dans les zones d'angle des plaques.

7. Dispositif de liaison (10) selon la revendication 6, **caractérisé en ce qu'**il comprend des douilles (16) disposées dans les trous de montage (10.2) pour renforcer les plaques (11, 12).
